# EUROPÄISCHE PATENTSCHRIFT

(11) **EP 4 288 276 B1**
(45) Veröffentlichungstag und Bekanntmachung des Hinweises auf die Patenterteilung: **01.04.2026**
(21) Anmeldenummer: 22708126.2
(22) Anmeldetag: 24.02.2022
(51) Int. Cl.: B29C 71/00, B33Y 80/00, B29C 64/188, B33Y 40/20

(54) **VERFAHREN ZUR SELEKTIVEN RÄUMLICHEN AUFTRENNUNG VON VERBUNDMATERIALIEN/KOMPOSITMATERIALIEN IN ADDITIV GEFERTIGTEN FORMTEILEN**
PROCESS FOR SELECTIVELY SPATIALLY SEPARATING COMPOUND MATERIALS/COMPOSITE MATERIALS IN ADDITIVELY MANUFACTURED MOLDINGS
PROCÉDÉ DE SÉPARATION SPATIALEMENT SÉLECTIVE DE MATÉRIAUX COMPOSITES/MATÉRIAUX COMPOSITES DANS DES MOULAGES FABRIQUÉS DE MANIÈRE ADDITIVE

(30) Priorität: 26.02.2021 DE 102021104659
(43) Veröffentlichungstag der Anmeldung: 13.12.2023
(73) Patentinhaber: DyeMansion GmbH, 82152 Planegg (DE)
(72) Erfinder: ROSENFELD, Alisa, 82131 Stockdorf (DE); HEMMERLING, Annick, 81369 München (DE); HERZ, Fabian, 82335 Berg (DE); FOLGER, Alena, 82288 Kottgeisering (DE)
(74) Vertreter: 2s-ip Schramm Schneider Bertagnoll Patent- und Rechtsanwälte Part mbB
(86) Internationale Anmeldenummer: PCT/EP2022/054713
(87) Internationale Veröffentlichungsnummer: WO 2022/180186

(56) Entgegenhaltungen:
- WO-A1-2019/201932
- US-A1- 2005 173 838

## Beschreibung

Die Erfindung betrifft Verfahren zum Behandeln eines Formteils und ein Element erhältlich aus dem Verfahren.

Es ist bekannt, dass Formteile aus einem Polymer bzw. einem thermoplastischen Polymer mit unterschiedlichen Drucktechnologien hergestellt werden können. Industriell ist vor allem das selektive Lasersintern (SLS) eine verbreitete Methode. Das punktuelle und rasterartige Sintern des Pulvers mit einem oder mehreren Lasern hat meist lange Prozesszeiten zur Folge. Zur Verkürzung der Prozesszeit sind inzwischen mehrere Methoden entwickelt worden. Hier sind insbesondere auf Infrarotstrahlung basierte Verfahren, wie z.B. die Multi-Jet Fusion (MJF) Technologie, und das High Speed Sintern (HSS) zu nennen. Die ebenfalls stark beschleunigte Laser-Pro-Fusion Technologie basiert auf Lasern statt Infrarotstrahlung. Die Gemeinsamkeit der genannten Verfahren ist die Zugabe von energieabsorbierenden Stoffen in das Pulverbett. Im MJF- und HSS-Verfahren werden die Zusatzstoffe durch steuerbare Düsen selektiv in das weiße Kunststoffpulver eingebracht. Bei der Laser-Pro-Fusion Technologie beinhaltet das Pulver schon vor dem Sintern den Zusatzstoff. Auch andere Lasersinterverfahren nutzen Pulver mit energieabsorbierenden Zusatzstoffen. Die Zusatzstoffe ermöglichen allgemein durch schnelleren Energieeintrag (Energieabsorption) schnellere und kostengünstigere Verfahren. Durch den Einsatz von z. B. Ruß als günstiger energieabsorbierender Zusatzstoff sind Formteile, die im MJF-, HSS- oder Laser-Pro-Fusion-Verfahren hergestellt wurden, farblich meistens grau bis schwarz. Eine Einfärbung der dunklen Formteile durch subtraktive Farbmischung wird somit stark eingeschränkt.

Es ist außerdem bekannt, Druckmaterialien mit anderen Zusatzstoffen (zerkleinerte und lange mineralische, Kohlenstoff- oder Glasfaser, Farbpartikel, Nanopartikel und Nanoröhren, Holz, Metalle, usw.) zu versehen oder mehrere Polymermaterialien (z.B. ABS und PC) zu kombinieren, um die ästhetischen, mechanischen oder funktionalen Eigenschaften der Formteile zu beeinflussen. Solche Kompositmaterialien können in Fused Deposition Modeling (FDM) und in den bereits erwähnten SLS, HSS und MJF-Verfahren gedruckt werden. Die Druckverfahren bedingen das "Zusammenkleben" von Komponenten und somit homogene Verteilung von Komponenten innerhalb der (Polymer)matrix sowie isotrope Eigenschaften. Das führt aber dazu, dass die Oberfläche u.U. die nicht (stabil) einfärbbaren Bereiche offenbart (z.B. Glasfaser, oder Polymere mit geringerer Farbstoffaffinität).

Aus der WO 2019/185756 A1 ist ein Verfahren zum Behandeln von Elementen, die mittels additiver Fertigung erstellt wurden, bekannt. In diesem Zusammenhang beschreibt die WO 2019/185756 A1, dass es möglich ist, die oberste Schicht eines aus Polyamid 3D-gedruckten Formteils erst mit Salpetersäure für eine Zeitdauer bis zu 45 Minuten bei einer Temperatur von 0°C bis 65°C zu versetzen, wobei die Oberfläche eine schwarze Farbe annimmt. Wenn die Salpetersäure entfernt wurde und die Oberfläche in Kontakt mit einer flüssigen Lösung, wie z.B. Wasser kommt, verfärbt sich die vorher schwarze Oberfläche weißlich bis weiß. Nachteilig hier ist, dass stark oxidierende HNO₃ verwendet werden muss.

In der WO 2019/201932 A1 wird die Glättung der Oberflächen von 3D-gedruckten Formteilen mit Lösungsmitteln beschrieben. Die Glättung erfolgt durch den Kontakt des Lösungsmittels mit der Formteiloberfläche durch Eintauchen oder Bedampfen. Alle löslichen Polymere, die in Alkoholen, Tetrahydrofuran oder Dichlormethan löslich sind, sind mit der Methode kompatibel.

In WO 2014203254 A1 wird die chemische Glättung von 3D-gedruckten Formteilen durch Eintauchen in ein Lösungsmittel (beliebiges Lösungsmittel) beschrieben.

Prinzipiell werden im Stand der Technik die grauen 3D-gedruckten Formteile mit weniger hellen und brillanten Farben in einem Färbebad gefärbt. Vorhandende Rußpartikel sind nach der Färbung als schwarze Punkte sichtbar. Da die Oberfläche auch andere nicht (gut genug) einfärbbare Komponenten enthalten kann, beeinträchtigt das ebenfalls die Farbqualität. Je nach Druckverfahren können die Formteile auch komplett dunkelgrau bis schwarz sein, wobei hier keine Färbung mehr möglich ist. Eine Farbgebung ist in diesem Fall nur noch durch Lackieren zu erreichen. Die Änderung anderer Oberflächeneigenschaften kann daher ebenfalls durchs Aufbringen einer Extraschicht möglich sein (beispielsweise ein zusätzlicher Hitzeschild zwischen additiv gefertigten elektrischen Formteilen). Nachteilig ist hier, dass durch das Aufbringen einer zusätzlichen Schicht die Geometrie des Bauteils signifikant verändert wird.

Es besteht daher der Bedarf für ein verbessertes Verfahren zur Behandlung von Formteilen, vorzugsweise eine Inhomogenität an der Oberfläche der intrinsisch homogenen Formteile zu erzeugen, um die unerwünschten, durch Füll-/Zusatzstoffe bedingten Oberflächenerscheinungen ohne Aufbringen von Stoffen (z.B. Coating) zu nivellieren und synergetisch weitere nützliche Funktionalität einzuführen.

Diese Aufgabe wird gelöst durch die Merkmale der unabhängigen Ansprüche. Die Merkmale in den abhängigen Ansprüchen definieren besondere Ausführungsformen.

Daher betrifft die Erfindung ein Verfahren zum Behandeln eines Formteils, umfassend die Schritte:
a) Bereitstellen eines Formteils aufgebaut aus
   a1) mindestens einem Polymer K und
   a2) mindestens einem Werkstoff, der sich vorzugsweise von dem Polymer K unterscheidet,
b) Kontaktierung des Formteils mit mindestens einem Lösungsmittel A,
   b1) Herstellung eines Gels basierend auf dem Polymer K des Formteils und dem Lösungsmittel A,
c) Bildung eines Konzentrationsgradienten an der Oberfläche des Formteils aus dem Polymer K und dem Werkstoff, wobei die Konzentration des Polymers K zur Oberfläche zunimmt,
d) zumindest anteilige Komponententrennung,wobei das Lösungsmittel A das Polymer K zumindest teilweise an der Oberfläche quellen lässt,

wobei das Formteil mittels additiver Fertigung hergestellt wird und der Werkstoff mit dem Polymer K verblendet ist, und
wobei der Werkstoff ausgewählt wird aus elektrisch leitfähigen organischen Materialien, Polymeren mit einer anderen Polarität als das Polymer K, Keramiken, Metallen, Legierungen, Gläsern, Graphit, Aktivkohle, Ruß, Fullerenen, Kohlenstoff-Nanotubes, Kohlenstofffasern, Graphen und Graphenderivaten wie z.B. Graphennanoplättchen, amorphen Kohlenstoff oder Mischungen daraus.

Vorzugsweise betrifft die Erfindung ein Verfahren zum Behandeln eines Formteils, umfassend die Schritte:
a) Bereitstellen eines Formteils aufgebaut aus
   a1) mindestens einem Polymer K und
   a2) mindestens einem Werkstoff, der sich vorzugsweise von dem Polymer K unterscheidet,
b) Kontaktierung des Formteils mit mindestens einem Lösungsmittel A,
   b1) Herstellung eines Gels basierend auf dem Polymer K des Formteils und dem Lösungsmittel A
c) Bildung eines Konzentrationsgradienten an der Oberfläche des Formteils aus dem Polymer K und dem Werkstoff, wobei die Konzentration des Polymers K zur Oberfläche zunimmt.

Die beschriebenen Formteile sind aus den zwei Komponenten, dem Polymer K und dem Werkstoff, aufgebaut, die unterschiedliche Eigenschaften, z.B. bezüglich der Einfärbbarkeit, haben. Vorzugsweise besteht das Formteil aus dem Polymer K und dem Werkstoff. Dabei sind diese ineinander verschmolzenen Komponenten herstellungsmethodenbedingt vorzugsweise gleichmäßig im gesamten Formteil verteilt. Dies führt dazu, dass die Oberfläche des Formteils zum Teil aus nicht (gut genug) einfärbbarem Werkstoff besteht (z.B. Ruß, Glas, Polymere ohne reaktive Gruppen, wie z.B. Teflon).

Idealerweise bewirkt der Konzentrationsgradient, dass keine Werkstoffe in der Ebene der Oberfläche des Formteils vorhanden sind, sodass die Oberfläche von dem Polymer K gebildet wird. Vorteilhafterweise bildet sich der Konzentrationsgradient unabhängig von der Gravitation aus, d.h. ein vollständig mit dem Lösungsmittel A kontaktierter Körper bildet einen entsprechenden Gradienten.

Daher bezeichnet ein Konzentrationsgradient im Sinne der vorliegenden Erfindung vorzugsweise den Verlauf der Änderung der Konzentration des Polymers K in dem Formteil in Bezug auf den Werkstoff in Richtung der Oberfläche des Formteils. Dabei nimmt die Konzentration des Polymers K zur Oberfläche zu, insbesondere, wenn man es mit der Konzentration vor Kontaktierung des Formteils mit mindestens einem Lösungsmittel A vergleicht. Vorzugsweise weist durch den Konzentrationsgradienten die Oberfläche des Formteils keinen Werkstoff auf.

Ein Vorteil dieser Erfindung ist es, die Oberfläche des Formteils ohne Aufbringen von zusätzlichen Schichten in einem Schritt so zu verändern, dass diese besser oder überhaupt erst einfärbbar wird, oder andere, oft denen im Inneren des Bauteils entgegengesetzte, aber für die bestimmte Anwendung vorteilhafte Oberflächeneigenschaften bekommt. So können sich beispielsweise durch die Umwandlung von grauen Formteiloberflächen in weiße Oberflächen die Teile uneingeschränkt einfärben lassen. Da kein Material ab- oder aufgetragen werden muss, bleiben im Gegensatz zu einem additiven Verfahren, wie z. B. Lackieren, die Dimensionen des Formteils erhalten.

Daher kann vorteilhafterweise sogar unabhängig von der Drucktechnologie die Farbe der Oberfläche der grauen 3D-gedruckten Formteile zu einem weißen Farbton bzw. in den natürlichen Farbton des Polymers umgewandelt werden. Dies hat den Vorteil, dass man nicht mehr auf eine Drucktechnologie limitiert ist, womit man weiße 3D-gedruckte Formteile herstellen kann. Im Ergebnis führt dies zu einer kostengünstigeren und zeitsparenden Drucktechnologie, wie z.B. das MJF-Druckverfahren, um die Formteile zu drucken. Ein weiterer Vorteil ist, dass die Färbemöglichkeiten, nachdem die 3D-gedruckten Formteile mit diesem Prozess behandelt wurden, beachtlich erweitert werden können. So ist dadurch eine homogene Einfärbung (z.B. ohne schwarze Ruß-Punkte an der Oberfläche) sowie ein größeres Farbspektrum (insbesondere Einfärben mit helleren oder brillanten Farben) möglich. Der Färbeprozess, der für Polymere ohne Werkstoffe optimiert ist, kann direkt übernommen werden.

Es kann vorteilhaft sein, wenn das Formteil vor oder nach dem erfindungsgemäßen Verfahren weiteren Bearbeitungsprozessen, wie Entpacken, Entpulvern, Verdichten, Schleifen, Glätten, Imprägnieren, Färben, Coaten, Beschichten und/oder Lackieren unterzogen wird.

Vorzugsweise kann durch das erfindungsgemäße Verfahren bei dem das Formteil einen Recyclingstoff aus einem Polymer umfasst der ursprüngliche bzw. natürliche Farbton ohne die Zusatzstoffe, die die Farbe ändern, wieder hergestellt werden.

Idealerweise können verschiedene Polymerklassen verarbeitet werden. Dies ermöglicht, dass verschiedenste Bauteile behandelt werden können und so an spezifische Anforderungen angepasst werden können.

Daher ist das Polymer K vorzugweise ausgewählt aus der Gruppe, bestehend aus thermoplastischen Elastomeren, Polyoxymethylenen, Polyethylenterephthalaten, Polyethylenterephthalat Glycolen, Polyetherblockamiden, Polyethylenfuranoaten, Polyurethanen, Acryl-Nitril-Butadien-Styrolen, thermoplastischen Polyamiden, Photopolymeren, Triblock-Polymeren aus Polystyrol und Poly(ethylenoxid)-Blöcken, Polyamiden, Polyestern, Polyolefinen, Polyacrylaten, Polyvinylaminen, Polyacrylamiden, Polymethyl(meth)acrylaten, Polyethern, Polycarbonaten, Polylactiden, Polyethersulfonen, Polysulfonen, Polyphenylsulfonen, Polyimiden, Polyetherimiden, Polyketonen, Polyetherketonen, Styrolpolymeren, Styrol-blockpolymeren, Acrylnitrilstyrolacrylaten, oder Copolymeren, Blends oder Mischungen der genannten Polymerarten daraus.

In Abhängigkeit der oben genannten Polymerarten ist es erforderlich, dass das Formteil, welches aus dem Polymer K aufgebaut ist, unterschiedlich lange mit dem Lösungsmittel A kontaktiert wird. Dabei können die Größe des Formteils, die Oberflächenbeschaffenheit, wie zum Beispiel Porosität, oder die Hohlräume entsprechend berücksichtigt werden.

Das erfindungsgemäße Verfahren zum Behandeln eines Formteils umfasst die Schritte des Bereitstellens eines Formteils aufgebaut aus mindestens einem Polymer K und mindestens einem Werkstoff gefolgt von dem Schritt b), der Kontaktierung des Formteils mit mindestens einem Lösungsmittel A.

Vorzugweise wird der Schritt b) für 5 sec bis 20 h, besonders bevorzugt für 1 min bis 5 h, insbesondere für 1 min bis 5 min ausgeführt. Diese Zeitspanne ermöglicht es vorteilhaftweise, dass das Lösungsmittel das Polymer anlösen bzw. quellen lassen kann.

Vorzugsweise wird Schritt b) bei Atmosphärendruck durchgeführt.

Erfindungsgemäß lässt das Lösungsmittel A eine zumindest teilweise Quellung des Polymers K an der Oberfläche.

Ganz besonders bevorzugt kann das Lösungsmittel A das Polymer K an der gesamten Oberfläche, mit der das Polymer K kontaktiert wird, quellen lassen.

Die gebildete Quellschicht liegt dabei vorzugsweise im Bereich zwischen 5-500 µm, besonders bevorzugt im Bereich zwischen 10-200 µm.

Vorzugsweise erfolgt die Kontaktierung des Formteils durch ein Eintauchen, ein Bedampfen oder ein Besprühen. Dazu können unter anderem Autoklaven, Tauchbäder, Tropfvorrichtungen, Spritz-, Tauch-, Schwallflut- und Dampfreinigungsanlagen, Dampfglättanlagen, Vernebelungsdüsen, Zerstäuber und andere Sprühvorrichtungen verwendet werden.

Damit es zu einem Quellen bzw. Anlösen kommen kann, sollte das Lösungsmittel A vorteilhafterweise eine ähnliche Polarität wie das Polymer K aufweisen.

Bevorzugt ist das Lösungsmittel A ausgewählt aus der Gruppe, bestehend aus Ketonen, Aldehyden, Lactonen, Lactamen, Nitrilen, Nitroverbindungen, tertiären Carbonsäureamiden, Harnstoffderivaten, Sulfoxiden, Sulfonen, Kohlensäureestern, Wasser, Alkoholen, Aminen, Carbonsäuren, primären Amiden, sekundären Amiden, halogenhaltigen Kohlenwasserstoffen oder Mischungen daraus. Die oben genannten polaren Lösungsmittel eignen sich besonders für polare Polymere, um diese entsprechend anzulösen bzw. quellen zu lassen.

Vorzugsweise ist das Lösungsmittel A ebenfalls ausgewählt aus der Gruppe, bestehend aus Kohlenwasserstoffen, Petroleum, Aromaten, Carbonsäuren, Estern, Ethern oder Mischungen daraus. Die genannten unpolaren Lösungsmittel eignen sich besonders bevorzugt für unpolarere oder nicht weniger polare Polymere, um diese entsprechend anzulösen oder quellen zu lassen.

Das Prinzip der oberflächennahen Trennung durch den Quellvorgang von Komponenten funktioniert generell für alle Systeme, bei denen nur eine Komponente in einem gewählten Lösungsmittel löslich ist. Ein entsprechendes Lösungsmittel kann daher für jede Komponente (z.B. Polymerart) und für jede beabsichtigte Anwendung passend gewählt werden.

Bevorzugte Beispiele für relevante Polymer-Partikel-Systeme sind ruß-gefülltes Polyamid 12, ruß-gefülltes Polyamid 11, ruß-gefülltes Polypropylen und/oder ruß-gefülltes TPU (Thermoplastische Polyurethan). Geeignete Lösungsmittel für Polyamide sind beispielsweise Benzylalkohol, N-Methyl-2-pyrrolidon (NMP), N-Butyl-2-pyrrolidone (NBP), Propylencarbonat, Dimethylcarbonat, Diethylcarbonat, Ethylencarbonat, Ethyl-methyl-carbonat, γ-Butyrolacton (GBL), Mischungen aus Dichlormethan und Ameisensäure und andere polare Lösungsmittel. Geeignete Lösungsmittel für Polypropylen sind beispielsweise Alkylbenzole, Limonen, Diethylbenzol und andere unpolare Lösungsmittel. Geeignete Lösungsmittel für TPU (Thermoplastische Polyurethane) sind beispielsweise Benzylalkohol und Dimethylsulfoxid.

Das erfindungsgemäße Verfahren lässt sich nicht nur bei Partikel-gefüllten Polymeren (d.h. Polymer und Werkstoff) anwenden, sondern ist auch in der Lage andere homogene Mehrkomponenten-Gemische zu trennen. Beispielsweise können mit Farbpigmenten und Farbstoffen gefärbte Kunststoffe aufgehellt werden. Voraussetzung ist generell, dass eine Komponente eine unterschiedliche Löslichkeit (bzw. keine Löslichkeit) als die andere Komponente im ausgewählten Lösungsmittel aufweist. Das erfindungsgemäße Verfahren ist vorteilhafterweise nicht nur für Formteile aus dem 3D-Druck, sondern für alle Kunststoffteile mit Zusatzstoffen anwendbar.

Durch Kontaktierung des Formteils mit mindestens einem Lösungsmittel A, vorzugsweise durch das Eintauchen des Formteils in ein geeignetes Lösungsmittel, durch Besprühen des Formteils mit einem geeigneten Lösungsmittel oder durch Bedampfen des Formteils mit einem geeigneten Lösungsmittel wird der lösliche Bestandteil, das Polymer K, von den in diesem Lösungsmittel unlöslichen Bestandteil, dem Werkstoff, räumlich getrennt.

Vorteilhafterweise lassen sich durch die selektive räumliche Trennung von Komponenten und darauffolgende Umhüllung von dem nicht einfärbbaren Werkstoff durch ein einfärbbares Polymer K durch die Schritte b) und c) die Bauteile uneingeschränkt färben. So lässt sich die Einfärbbarkeit on-demand einbringen, ohne auf die überlegenen Eigenschaften von Mehrkomponenten-Polymermischungen verzichten zu müssen. Oft ist es auch erwünscht, unterschiedliche Eigenschaften an der Oberfläche und im Inneren des Formteils zu haben.

Durch diese räumliche Trennung können andere Oberflächeneigenschaften des Formteils erzielt werden. Beispielsweise kann es zu einer anderen Haptik kommen.

Erfindungsgemäß umfasst das Verfahren den Schritt:
b1) Herstellung eines Gels basierend auf dem Polymer K des Formteils und dem Lösungsmittel A.

Das Polymer K-Lösungsmittel A-Gel legt sich dabei vorzugsweise um die unlöslichen Komponenten (Werkstoff) und überdeckt diese. Die Temperatur, der Druck, die Dauer des Kontakts mit dem Lösungsmittel sowie andere Faktoren, die die Diffusion des Lösungsmittels beeinflussen, bestimmen über die Stärke des Lösungsvorgangs bzw. Quellungsvorgangs.

Erfindungsgemäß umfasst das Verfahren zudem den Schritt:
d) zumindest anteilige Komponententrennung. Das Gel quillt und legt sich um die weniger löslichen Teile um.
Durch die anteilige Komponententrennung (Polymer K und Werkstoff) lassen sich vorzugsweise andere Oberflächeneigenschaften erzielen. So können beispielsweise nicht alle Bereiche die gleichen Eigenschaften aufweisen. Ebenfalls können so beispielsweise Bereiche hergestellt werden, die weiß sind und einfärbbare Gruppen aufweisen und mit einem Farbstoff versetzt werden können, wohin gegen andere Bereiche keine Veränderung erfahren. Vorzugweise weist das Formteil auf der Oberfläche nur das Gel auf.

Vorzugsweise umfasst das Verfahren zudem den Schritt:
e) Trocknen des Formteils bei Atmosphärendruck und einer Temperatur im Bereich von 10°C bis 140°C, ganz besonders bevorzugt bei 20°C bis 80°C. Oder alternativ das Trocknen im Vakuum (0-900 mbar) bei Temperaturen zwischen 10°C und 140°C, ganz besonders bevorzugt zwischen 20°C und 80°C.

Die Temperatur und der Druck werden vorzugsweise so gewählt, dass die Temperatur unter der Schmelztemperatur des Polymers K, besonders bevorzugt unter der Erweichungstemperatur des Polymers K liegt und die Kombination aus Druck und Temperatur ein Entweichen des Lösungsmittels aus dem Gel in einer realistischen Zeitspanne ermöglicht. Durch diesen Temperaturbereich bei der Trocknung erfolgt kein großer Energieeintrag in das Formteil. Dies hat zum einen den Vorteil, dass insbesondere thermoplastische Formteile ihre Form nicht verändern, zum anderen, dass keine hohen Energiekosten entstehen. Dies ermöglicht beispielsweise die Massenproduktion oder einen hohen Durchsatz bei der Behandlung eines Formteils mit dem erfindungsgemäßen Verfahren. Für ein Lösungsmittel mit einem Siedepunkt von ca. 200°C eignet sich beispielsweise eine Trocknung bei 20 mbar und 80°C.

Nach dem Trocknungsschritt e) liegt das Polymer K an der Oberfläche des Formteils in einer geänderten Kristallinität vor als vor dem Verfahren. Die Kristallinität an der Oberfläche kann durch die gewählte Temperatur und den Druck im Trocknungsverfahren e) sowie die Dauer der Kontaktierung des Formteils mit dem Lösungsmittel A in Schritt b) beeinflusst werden.

Die veränderte Kristallinität an der Oberfläche des Formteils kann durch Dichtemessung, dynamische Differenzkalorimetrie, Röntgenbeugung, IR-Spektroskopie oder NMR-Spektroskopie verfolgt werden.

Das Verfahren kann genutzt werden, um eine Oberfläche eines Formteils zu erzeugen, welche sich vom Inneren des Formteils unterscheidende, chemische und/oder physikalische Eigenschaften aufweist.

Das Formteil wird erfindungsgemäß mittels additiver Fertigung hergestellt in einem Verfahren ausgewählt aus der Gruppe, bestehend aus Pulverbettverfahren, wie (selektives) Lasersintern (SLS), Binder Jetting, Multijet Fusion Technologien (MJF), Highspeed Sintering (HSS), Cold Metal Fusion oder Laserschmelzverfahren; lichthärtenden Verfahren, wie Stereolithographie (SLA oder STL), Digital Light Production (DLP), Continuous Light Interface Production (CLIP), PolyJet Verfahren (PJM), DualCure-Verfahren, HotLithography sowie Extrusionsverfahren wie Fused Deposition Modeling (FDM), Fused Filament Fabrication (FFF), MultiJet Modeling (MJM), Layer Plastic Deposition, Selective Thermoplastic Electrophotographic Process (STEP).

Die mittels dieser Methoden hergestellten Formteile bestehen vorzugsweise aus Kunststoff und können gegebenenfalls weitere Werkstoffe enthalten. Kunststoffe zeichnen sich durch ihre vielfältigen Eigenschaften aus und können an die jeweiligen Anwendungsgebiete angepasst werden.

Erfindungsgemäß ist der Werkstoff mit dem Polymer K verblendet. Dabei kann verblenden im Sinne der Erfindung Verschmelzen, Vermengen, nachträgliches Einbringen eines Werkstoffs in die Oberfläche (z.B. durch Strahlen mit Glas, Sand oder Keramikpartikeln) sowie physikalische Vermischung des Polymers K mit dem Werkstoff bedeuten.

Vorzugsweise umfasst das Verfahren den Schritt:
f) Einfärben des Formteils mit einem Farbstoff. Das Einfärben erfolgt vorzugsweise in einer Farbstofflösung.

Vorzugsweise besteht die Farbstofflösung aus mindestens einem Farbstoff, welcher in einem Lösungsmittel gelöst ist. Der Farbstoff kann ausgewählt werden aus, ist aber nicht beschränkt auf, Säurefarbstoffe, Dispersionsfarbstoffe, Direktfarbstoffe, Reaktivfarbstoffe, Metallkomplexfarbstoffe, Küpenfarbstoffe, Entwicklungsfarbstoffe und kationische Farbstoffe.

Erfindungsgemäß bevorzugt ist daher der Werkstoff ausgewählt aus elektrisch leitfähigen organischen Materialien, Polymeren mit einer anderen Polarität als das Polymer K, Keramiken, Metallen, Legierungen oder Gläsern, Graphit, Aktivkohle, Ruß, Fullerenen, Kohlenstoff-Nanotubes, Kohlenstofffasern, Graphen und Graphenderivaten wie z.B. Graphennanoplättchen, amorphen Kohlenstoff oder Mischungen daraus.

Auch kann die elektrische und thermische Leitfähigkeit des Formteils durch diese Oberflächenmodifikation verändert werden. Daher kann man die räumliche Trennung dazu verwenden, um neben der Einfärbbarkeit auch andere Eigenschaften an der Oberfläche im Vergleich zum Inneren des Bauteils zu verändern. So könnte man z.B. die Oberfläche elektrisch isolieren, indem man die leitende und isolierende Komponente voneinander räumlich trennt, und die isolierende Komponente, das Polymer K, sich um die leitende, den Werkstoff, hüllt. Dazu eignen sich vorzugweise Werkstoffe, die elektrisch und/oder thermisch leitfähig sind.

Auch hier ist der Vorteil der Umwandlung des bestehenden Materials, dass kein Material ab- oder aufgetragen werden muss. Im Gegensatz zu einem additiven Verfahren, wie z. B. Lackieren, werden die Dimensionen des Formteils erhalten.

Besonders bevorzugt ist daher der Werkstoff ausgewählt aus der Gruppe, bestehend aus Graphit, Aktivkohle, Ruß, Fullerenen, Kohlenstoff-Nanotubes, Kohlenstofffasern, Graphen und Graphenderivaten wie z.B. Graphennanoplättchen, amorphen Kohlenstoff oder Mischungen daraus.

Ein weiterer Gegenstand der Erfindung ist ein Element erhältlich aus dem erfindungsgemäßen Verfahren.

Besonders bevorzugt ist ein Element erhältlich aus einem Verfahren zum Behandeln eines Formteils, umfassend die Schritte:
a) Bereitstellen eines Formteils aufgebaut aus
   a1) mindestens einem Polymer K, wobei das Polymer K ausgewählt ist aus der Gruppe, bestehend aus thermoplastischen Elastomeren, Polyoxymethylenen, Polyethylenterephthalaten, Polyethylenterephthalat Glycolen, Polyetherblockamiden, Polyethylenfuranoaten, Polyurethanen, Acryl-Nitril-Butadien-Styrolen, thermoplastischen Polyamiden, Photopolymeren, Triblock-Polymeren aus Polystyrol und Poly(ethylenoxid)-Blöcken, Polyamiden, Polyestern, Polyolefinen, Polyacrylaten, Polyvinylaminen, Polyacrylamiden, Polymethylmethacrylaten, Polyethern, Polycarbonaten, Polylactiden, Polyethersulfonen, Polysulfonen, Polyphenylsulfonen, Polyimiden, Polyetherimiden, Polyketonen, Polyetherketonen, Styrolpolymeren, Styrolblockpolymeren, Acrylnitrilstyrolacrylaten oder Copolymeren, Blends oder Mischungen der genannten Polymerarten daraus,
      und
   a2) mindestens einem Werkstoff, wobei der Werkstoff ausgewählt ist aus elektrisch leitfähigen organischen Materialien oder Polymeren mit einer anderen Polarität als das Polymer K, Keramiken, Metallen, Legierungen oder Gläsern, oder Graphit, Aktivkohle, Ruß, Fullerenen, Kohlenstoff-Nanotubes, Kohlenstofffasern, Graphen und Graphenderivaten wie z.B. Graphennanoplättchen, amorphen Kohlenstoff oder Mischungen daraus,
b) Kontaktierung des Formteils mit mindestens einem Lösungsmittel A, wobei das Lösungsmittel ausgewählt ist aus der Gruppe, bestehend aus Ketonen, Aldehyden, Lactonen, Lactamen, Nitrilen, Nitroverbindungen, tertiären Carbonsäureamiden, Harnstoffderivaten, Sulfoxiden, Sulfonen, Kohlensäureestern, Wasser, Alkoholen, Aminen, Carbonsäuren, primären Amiden, sekundären Amiden, halogenhaltigen Kohlenwasserstoffen oder Mischungen daraus, oder Kohlenwasserstoffen, Petroleum, Aromaten, Carbonsäuren, Estern, Ethern oder Mischungen daraus,
c) Bildung eines Konzentrationsgradienten an der Oberfläche des Formteils aus dem Polymer K und dem Werkstoff, wobei die Konzentration des Polymers K zur Oberfläche zunimmt.

Vorzugsweise ist ein Element erhältlich aus einem Verfahren zum Behandeln eines Formteils, umfassend die Schritte:
a) Bereitstellen eines Formteils aufgebaut aus
   a1) mindestens einem Polymer K, wobei das Polymer K ausgewählt ist aus der Gruppe, bestehend aus thermoplastischen Elastomeren, Polyoxymethylenen, Polyethylenterephthalaten, Polyethylenterephthalat Glycolen, Polyetherblockamiden, Polyethylenfuranoaten, Polyurethanen, Acryl-Nitril-Butadien-Styrolen, thermoplastischen Polyamiden, Photopolymeren, Triblock-Polymeren aus Polystyrol und Poly(ethylenoxid)-Blöcken, Polyamiden, Polyestern, Polyolefinen, Polyacrylaten, Polyvinylaminen, Polyacrylamiden, Polymethylmethacrylaten, Polyethern, Polycarbonaten, Polylactiden, Polyethersulfonen, Polysulfonen, Polyphenylsulfonen, Polyimiden, Polyetherimiden, Polyketonen, Polyetherketonen, Styrolpolymeren, Styrol-blockpolymeren, Acrylnitrilstyrolacrylaten oder Copolymeren, Blends oder Mischungen der genannten Polymerarten daraus,
      und
   a2) mindestens einem Werkstoff, wobei der Werkstoff ausgewählt ist aus elektrisch leitfähigen organischen Materialien oder Polymeren mit einer anderen Polarität als das Polymer K, Keramiken, Metallen, Legierungen oder Gläsern, oder Graphit, Aktivkohle, Ruß, Fullerenen, Kohlenstoff-Nanotubes, Kohlenstofffasern, Graphen und Graphenderivaten wie z.B. Graphennanoplättchen, amorphen Kohlenstoff oder Mischungen daraus,
b) Kontaktierung des Formteils mit mindestens einem Lösungsmittel A, wobei das Lösungsmittel ausgewählt ist aus der Gruppe, bestehend aus Ketonen, Aldehyden, Lactonen, Lactamen, Nitrilen, Nitroverbindungen, tertiären Carbonsäureamiden, Harnstoffderivaten, Sulfoxiden, Sulfonen, Kohlensäureestern, Wasser, Alkoholen, Aminen, Carbonsäuren, primären Amiden, sekundären Amiden, halogenhaltigen Kohlenwasserstoffen oder Mischungen daraus, oder Kohlenwasserstoffen, Petroleum, Aromaten, Carbonsäuren, Estern, Ethern oder Mischungen daraus,
   b1) Herstellung eines Gels basierend auf dem Polymer K des Formteils und dem Lösungsmittel A,
c) Bildung eines Konzentrationsgradienten an der Oberfläche des Formteils aus dem Polymer K und dem Werkstoff, wobei die Konzentration des Polymers K zur Oberfläche zunimmt.

### Kurze Figurenbeschreibung

Figur 1: In der Figur 1 wird schematisch die Oberfläche in der Draufsicht von einem Formteil aus dem Polymer K (schwarz) und dem Werkstoff (grau) illustriert, die miteinander verschmolzen sind. Dies wird durch die unscharfen Übergänge illustriert.
Figur 2: In der Figur 2a wird schematisch gezeigt, dass sich ein Polymer K-Lösungsmittel-Gel gebildet hat. Dies wird durch die texturierte Fläche illustriert. Durch das Quellen des Gels wird der Werkstoff teilweise verdeckt (Figur 2b).
Figur 3: In der Figur 3a wird schematisch gezeigt, wie das Polymer K den Werkstoff komplett umhüllt und man sieht in der Draufsicht nur noch das Polymer K, das sich nach Abdampfen des Lösungsmittels (bei Raumtemperatur, durch Wärme oder durch Vakuum) wieder verfestigt (Figur 3b)
Figur 4: Figur 4 illustriert einen Querschnitt des Formteils nachdem es dem erfindungsgemäßen Verfahren unterworfen wurde. Darin erkennt man, dass der Werkstoff (grau) innerhalb der Polymermatrix des Polymers K (schwarz) enthalten ist und nicht mehr an der Oberfläche erscheint.

### Detaillierte Beschreibung der Figuren

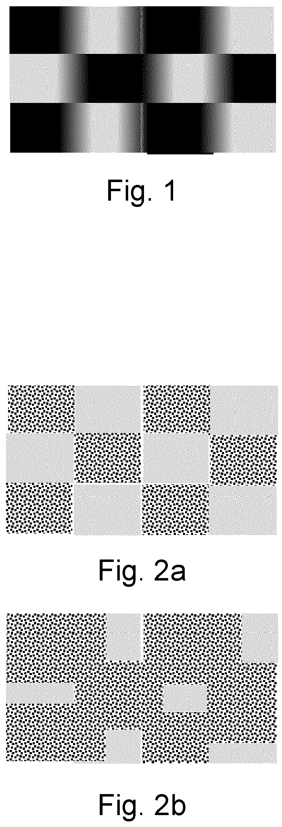

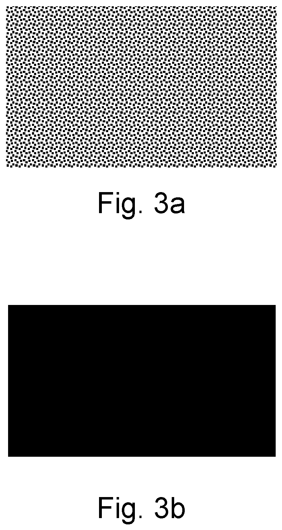

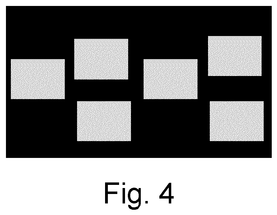

Figur 1 zeigt, dass an der Oberfläche des Formteils das Polymer K und der Werkstoff vorhanden sind. Dabei stellen die schwarzen Bereiche das Polymer K dar und die grauen Bereiche stellen den Werkstoff dar. Nachdem das Formteil mit einem Lösungsmittel (in der Dampfform oder in der flüssigen Form) kontaktiert wurde, dass das Polymer K zum Quellen bringt, bildet sich ein Polymer K-Lösungsmittel-Gel (siehe Figur 2, Figur 3a, texturierte Bereiche). Nach einer definierten Dauer (z.B. 2 min) wird das Formteil von dem Dampf oder von der Lösung getrennt. Nach Abdampfen des Lösungsmittels (bei Raumtemperatur, durch Wärme oder durch Vakuum) verfestigt, bzw. kristallisiert die lösliche Komponente wieder auf der Oberfläche. Nun sind keine Werkstoffe mehr an der Oberfläche des Formteils vorhanden, so dass die Oberfläche vorzugsweise ausschließlich von dem Polymer K gebildet wird. Nach dem Trocknungsschritt liegt das Formteil an der Oberfläche in einer geänderten Kristallinität und/oder Dichte vor, als vor dem Verfahren. Die Oberfläche zeigt nun eine sich vom Inneren des Formteils unterscheidende Kristallinität. Die veränderte Kristallinität wurde mittels Röntgenbeugung nachgewiesen. Im Anschluss des Verfahrens weist die verfestigte Oberfläche des Formteils daher, sich vom Inneren des Formteils unterscheidende, chemische und/oder physikalische Eigenschaften auf. Im Fall von ruß-gefüllten Bauteilen beinhaltet die neue Polymerschicht an der Oberfläche keine Füllstoffe (Werkstoffe) mehr (dies wird in den Figuren 3b und 4 exemplarisch dargestellt) und erscheint dadurch in ihrer natürlichen Farbe, welche bei den meisten Polymeren farblos ist. Die Farbe der neu gebildeten Polymerschicht ist stark von der Kristallinität des Polymers abhängig. Vor allem teilkristalline oder kristalline Bereiche des Polymers sind stark lichtbrechend und führen zu einem weißen Erscheinungsbild. Im Sinne der vorliegenden Erfindung umfasst dieses weiße Erscheinungsbild eine visuell wahrnehmbare Aufhellung. In einer Variante der Erfindung kann die Aufhellung so weit gehen, dass sie als Weißfärbung wahrgenommen wird. Durch die Geschwindigkeit, Temperatur und die Siedepunkte im Lösungsmittel(gemisch) kann die Aushärtegeschwindigkeit und damit die Kristallinität und Dichtheit des Materials beeinflusst werden. Damit können auch die Dichtheit und Farbe des Materials darüber beeinflusst werden. Die weiße Polymeroberfläche lässt sich uneingeschränkt mit den etablierten Methoden färben.

### Beispiele:

### Beispiel 1

Ruß-gefüllte polare Polymere wie HP 3D HR PA12, HP 3D HR PA11 (welches Polyamide auf Basis von PA12/11 mit Graphit sind), wurden in heißes NMP getaucht. Nach dem Abdampfen des Lösungsmittels ist eine weiße Polymerschicht vorhanden. Die Oberfläche der polaren Polymere wies nach dem Verfahren eine veränderte Kristallinität auf. Die weiße Schicht konnte erfolgreich in einem Tauchbad mit wässriger Farbstofflösung eingefärbt werden. Die weiße Schicht ließ sich zusätzlich durch eine Prozessierung in einer Bedampfungsanlage mit Lösungsmittel nachbehandeln, was zu einer kratzfesten weißen Oberfläche führte.

### Beispiel 2

HP Ultrasint Polypropylen Formteile wurden jeweils in heißes Toluol, Limonen, Dichlorbenzol getaucht. Danach tritt eine starke Aufhellung der Oberfläche auf, die auf herausgelöstes Polymer zurückzuführen ist. Die Oberfläche der Formteile wies nach dem Verfahren eine veränderte Kristallinität auf.

### Beispiel 3

Ein Formteil aus HP 3D HR PA12 wurde in heißen Benzylalkohol (120°C) getaucht und für 45 Sekunden im Bad belassen. Anschließend wurde das Formteil herausgenommen und das Lösungsmittel langsam bei Raumtemperatur verdampft. Die Oberfläche des Formteils wies nach dem Verfahren eine veränderte Kristallinität auf. Die getrocknete Oberfläche ist nach dem Verdampfen weiß und lässt sich einfärben. Die MJF-typischen Rußpartikel sind nicht mehr sichtbar.

### Beispiel 4

Kommerziell erworbenes, lila gefärbtes Formteil (Masscoloration) aus Spritzguss-Polypropylen wurde in heißes Petroleum getaucht. Das Formteil wurde an Luft komplett weiß. Die Oberfläche des Formteils wies nach dem Verfahren eine veränderte Kristallinität auf.

### Beispiel 5

Die Formteile aus dem ruß-gefüllten polaren Polymer HP 3D HR PA12 und HP 3D HR PA11 wurden in ein Lösemittelgemisch aus Ameisensäure und Dichlormethan, im Verhältnis 1:1 bei Raumtemperatur für 30 - 60 Sekunden eingetaucht, rausgenommen und ebenfalls trocknen gelassen. Die Formteile wurden an Luft schnell komplett weiß. Die Oberfläche der Formteile wies nach dem Verfahren eine veränderte Kristallinität und Dichte auf.

### Beispiel 6

Das Formteil auf dem Glaskugel-gefüllten Polyamid 12 (z.B. PA 3200 GF, PA12-GB) wurde in der Bedampfungsanlage mit einem Lösungsmittel bedampft. Bei längeren Bedampfungszeiten und auch Einwirkzeiten kommt es zu einer räumlichen Trennung der Bestandteile. Die Polymermatrix legt sich über die unlöslichen Glaskugeln und ergibt nach dem Prozess eine homogene Oberfläche. Die Oberfläche des Formteils wies nach dem Verfahren eine veränderte Kristallinität auf.

### Beispiel 7

Ruß-gefüllte polare Polymere wie HP 3D HR PA12, HP 3D HR PA11 (welches Polyamide auf Basis von PA12/11 mit Graphit sind), wurden bei Atmosphärendruck in heißes γ-Butyrolacton (GBL) getaucht. Anschließend wurden die Formteile herausgenommen und das Lösungsmittel langsam bei Raumtemperatur und Atmosphärendruck verdampft. Die Oberfläche der polaren Polymere wies nach dem Verfahren eine veränderte Kristallinität auf. Die getrocknete Oberfläche ist nach dem Verdampfen weiß und lässt sich einfärben.

### Beispiel 8

Ruß-gefüllte polare Polymere wie HP 3D HR PA12, HP 3D HR PA11 (welches Polyamide auf Basis von PA12 bzw. PA11 mit Graphit sind), wurden bei Atmosphärendruck in heißes N-Butyl-2-pyrrolidone (NBP) getaucht. Nach dem Abdampfen des Lösungsmittels bei Raumtemperatur und Atmosphärendruck ist eine weiße Polymerschicht vorhanden. Die Oberfläche der polaren Polymere wies nach dem Verfahren eine veränderte Kristallinität auf. Die weiße Schicht konnte erfolgreich in einem Tauchbad mit wässriger Farbstofflösung eingefärbt werden.

Da im beschriebenen Prozess in den obigen Beispielen das Gemisch aus Polymer und Füllstoff oder aus zwei Polymeren nur räumlich getrennt wird, kommt es zu keiner geometrischen Veränderung. Eine Weißfärbung der Formteile gemäß den aus dem Stand der Technik bekannten Verfahren wie Dip-Coating oder Spray-Coating führt zwangsläufig zu einer Ablagerung von Material und damit zur Veränderung der Maße.

Das erfindungsgemäße Verfahren erhält nicht nur die Maße, sondern vermeidet auch die Einbringung von Fremdmaterialien (z. B. TiO2, Polymere usw.). Zusätzlich stellt das erfindungsgemäße Verfahren im Vergleich zu WO 2019/185756 A1 auch eine schonendere Methode dar, um graue Teile aufzuhellen. Im Gegensatz zu Salpetersäure sind die im erfindungsgemäßen Verfahren verwendeten Lösungsmittel deutlich weniger aggressiv, sind ggf. umweltfreundlicher und erhalten die molekulare Struktur der Polymere. Salpetersäure ist ein starkes Oxidationsmittel, welches auch Polymere und Füllstoffe angreifen kann. Das Herauslösen des polymeren Anteils mit Lösungsmitteln greift die molekulare Struktur nicht an und erhält somit die Eigenschaften des Formteils. Ebenfalls ist im Vergleich zu WO 2019/185756 A1 das erfindungsgemäße Verfahren auf nur einen Behandlungsschritt reduziert und damit eine Verbesserung hinsichtlich des technischen Aufwandes und der Prozessdauer.

## Patentansprüche

1. Verfahren zum Behandeln eines Formteils, umfassend die Schritte:
a) Bereitstellen eines Formteils aufgebaut aus
a1) mindestens einem Polymer K und
a2) mindestens einem Werkstoff,
b) Kontaktierung des Formteils mit mindestens einem Lösungsmittel A, **gekennzeichnet durch**:
b1) Herstellung eines Gels basierend auf dem Polymer K des Formteils und dem Lösungsmittel A,
c) Bildung eines Konzentrationsgradienten an der Oberfläche des Formteils aus dem Polymer K und dem Werkstoff, wobei die Konzentration des Polymers K zur Oberfläche zunimmt,
d) zumindest anteilige Komponententrennung,
wobei das Lösungsmittel A das Polymer K zumindest teilweise an der Oberfläche quellen lässt,
wobei das Formteil mittels additiver Fertigung hergestellt wird und der Werkstoff mit dem Polymer K verblendet ist, und
wobei der Werkstoff ausgewählt wird aus elektrisch leitfähigen organischen Materialien, Polymeren mit einer anderen Polarität als das Polymer K, Keramiken, Metallen, Legierungen, Gläsern, Graphit, Aktivkohle, Ruß, Fullerenen, Kohlenstoff-Nanotubes, Kohlenstofffasern, Graphen und Graphenderivaten wie z.B. Graphennanoplättchen, amorphen Kohlenstoff oder Mischungen daraus.

2. Verfahren nach Anspruch 1, wobei der Schritt b) für 5 sec bis 20 h ausgeführt wird, besonders bevorzugt für 1 min bis 5 h.

3. Verfahren nach einem der Ansprüche 1 bis 2, umfassend den Schritt:
e) Trocknen des Formteils bei Atmosphärendruck und einer Temperatur im Bereich von 10°C bis 140°C oder alternativ Trocknen im Vakuum (0-900 mbar) bei Temperaturen zwischen 10°C und 140°C.

4. Verfahren nach einem der Ansprüche 1 bis 3, wobei das Polymer K an der Oberfläche des Formteils nach dem Trocknungsschritt e) in einer anderen Kristallinität vorliegt als vor dem Verfahren, wobei sich die unterschiedliche Kristallinität in einer geänderten Lichtbrechung an der Oberfläche des Formteils darstellt, und wobei die geänderte Lichtbrechung zu einem weißen Erscheinungsbild des Formteils führt.

5. Verfahren nach Anspruch 4, wobei die geänderte Kristallinität an der Oberfläche des Formteils durch die gewählte Temperatur und den Druck im Trocknungsverfahren e) sowie die Dauer der Kontaktierung des Formteils mit dem Lösungsmittel A beeinflusst werden kann.

6. Verfahren nach einem der vorangegangenen Ansprüche, wobei die Stärke des Quellvorgangs an der Oberfläche des Polymers K durch Temperatur, Druck oder Dauer des Schrittes b) beeinflusst werden kann.

7. Verfahren nach einem der voranstehenden Ansprüche, wobei die Schritte b) - d) bei Atmosphärendruck durchgeführt werden.

8. Verfahren nach einem der vorangehenden Ansprüche, wobei im Trocknungsschritt e) die Temperatur unter der Schmelztemperatur des Polymers K, besonders bevorzugt unter der Erweichungstemperatur des Polymers K, liegt und die Kombination aus gewähltem Druck und Temperatur ein Entweichen des Lösungsmittels aus dem in Schritt b1) gebildeten Gel ermöglicht.

9. Verfahren nach einem der vorangehenden Ansprüche, umfassend den Schritt:
f) Einfärben des Formteils mit einem Farbstoff.

10. Verfahren nach einem der vorangehenden Ansprüche, wobei das Polymer K aus einem nicht-leitenden Material und der Werkstoff K aus einem leitenden Material besteht und die Oberfläche des Formteils nach dem Trocknungsschritt f) eine veränderte elektrische Leitfähigkeit aufweist.

11. Verfahren nach einem der Ansprüche 1 bis 10, wobei das Polymer K ausgewählt ist aus der Gruppe, bestehend aus thermoplastischen Elastomeren, Polyoxymethylenen, Polyethylenterephthalaten, Polyethylenterephthalat Glycolen, Polyetherblockamiden, Polyethylenfuranoaten, Polyurethanen, Acryl-Nitril-Butadien-Styrolen, thermoplastischen Polyamiden, Photopolymeren, Triblock-Polymeren aus Polystyrol und Poly(ethylenoxid)-Blöcken,, Polyamiden, Polyestern, Polyolefinen, Polyacrylaten, Polyvinylaminen, Polyacrylamiden, Polymethylmethacrylaten, Polyethern, Polycarbonaten, Polylactiden, Polyethersulfonen, Polysulfonen, Polyphenylsulfonen, Polyimiden, Polyetherimiden, Polyketonen, Polyetherketonen, Styrolpolymeren, Styrolblockpolymeren, Acrylnitrilstyrolacrylaten oder Copolymeren, Blends oder Mischungen der genannten Polymerarten daraus.

12. Verfahren nach einem der Ansprüche 1 bis 11, wobei die Kontaktierung des Formteils durch ein Eintauchen, ein Bedampfen oder ein Besprühen erfolgt.

13. Verfahren nach einem der Ansprüche 1 bis 12, wobei das Lösungsmittel A ausgewählt ist aus der Gruppe, bestehend aus Ketonen, Aldehyden, Lactonen, Lactamen, Nitrilen, Nitroverbindungen, tertiären Carbonsäureamiden, Harnstoffderivaten, Sulfoxiden, Sulfonen, Kohlensäureestern, Wasser, Alkoholen, Aminen, Carbonsäuren, primären Amiden, sekundären Amiden, halogenhaltigen Kohlenwasserstoffen oder Mischungen daraus.

14. Verfahren nach einem der Ansprüche 1 bis 13, wobei das Lösungsmittel A ausgewählt ist aus der Gruppe, bestehend aus Kohlensäureestern, Lactonen, Lactamen, Sulfoxiden oder Mischungen daraus.

15. Element erhältlich aus dem Verfahren gemäß einem der Ansprüche 1 bis 14.

## Claims

1. Method for treating a molded part, comprising the steps:
a) providing a molded part constructed from
a1) at least one polymer K and
a2) at least one material,
b) contacting the molded part with at least one solvent A,
**characterized by**:
b1) preparing a gel based on the polymer K of the molded part and the solvent A,
c) forming a concentration gradient on the surface of the molded part from the polymer K and the material, wherein the concentration of the polymer K increases towards the surface,
d) at least partial separation of components,
wherein the solvent A causes the polymer K to swell at least partially at the surface,
wherein the molded part is produced by additive manufacturing and the material is bonded to the polymer K, and
wherein the material is selected from electrically conductive organic materials, polymers with a different polarity than polymer K, ceramics, metals, alloys, glasses, graphite, activated carbon, carbon black, fullerenes, carbon nanotubes, carbon fibers, graphene, and graphene derivatives such as graphene nanoplatelets, amorphous carbon, or mixtures thereof.

2. Method according to claim 1, wherein step b) is carried out for 5 seconds to 20 hours, particularly preferably for 1 minute to 5 hours.

3. Method according to one of claims 1 to 2, comprising the step:
e) Drying the molded part at atmospheric pressure and a temperature in the range from 10°C to 140°C or, alternatively, drying in a vacuum (0-900 mbar) at temperatures between 10°C and 140°C.

4. Method according to one of claims 1 to 3, wherein the polymer K on the surface of the molded part after the drying step e) has a different crystallinity than before the method, wherein the different crystallinity manifests itself in a changed refraction of light on the surface of the molded part, and wherein the changed refraction of light leads to a white appearance of the molded part.

5. Method according to claim 4, wherein the altered crystallinity on the surface of the molded part can be influenced by the selected temperature and pressure in drying method e) and the duration of contact between the molded part and solvent A.

6. Method according to one of the preceding claims, wherein the intensity of the swelling process on the surface of the polymer K can be influenced by temperature, pressure, or duration of step b).

7. Method according to one of the preceding claims, wherein steps b) - d) are carried out at atmospheric pressure.

8. Method according to one of the preceding claims, wherein in drying step e) the temperature is below the melting temperature of polymer K, particularly preferably below the softening temperature of polymer K, and the combination of selected pressure and temperature allows the solvent to escape from the gel formed in step b1).

9. Method according to one of the preceding claims, comprising the step:
f) coloring the molded part with a dye.

10. Method according to one of the preceding claims, wherein the polymer K consists of a non-conductive material and the material K consists of a conductive material, and the surface of the molded part exhibits a changed electrical conductivity after the drying step f).

11. Method according to one of claims 1 to 10, wherein the polymer K is selected from the group consisting of thermoplastic elastomers, polyoxymethylenes, polyethylene terephthalates, polyethylene terephthalate glycols, polyether block amides, polyethylene furanoates, polyurethanes, acrylonitrile-butadiene-styrenes, thermoplastic polyamides, photopolymers, triblock polymers made from polystyrene and poly(ethylene oxide) blocks, polyamides, polyesters, polyolefins, polyacrylates, polyvinylamines, polyacrylamides, polymethyl methacrylates, polyethers, polycarbonates, polylactides, polyethersulfones, polysulfones, polyphenylsulfones, polyimides, polyetherimides, polyketones, polyetherketones, styrene polymers, styrene block polymers, acrylonitrile styrene acrylates or copolymers, blends or mixtures of the aforementioned polymer types.

12. Method according to one of claims 1 to 11, wherein the molding is contacted by immersion, vapor deposition, or spraying.

13. Method according to one of claims 1 to 12, wherein solvent A is selected from the group consisting of ketones, aldehydes, lactones, lactams, nitriles, nitro compounds, tertiary carboxylic acid amides, urea derivatives, sulfoxides, sulfones, carbonic acid esters, water, alcohols, amines, carboxylic acids, primary amides, secondary amides, halogenated hydrocarbons, or mixtures thereof.

14. Method according to one of claims 1 to 13, wherein the solvent A is selected from the group consisting of carbonic acid esters, lactones, lactams, sulfoxides, or mixtures thereof.

15. Element obtainable from the process according to any one of claims 1 to 14.

## Revendications

1. Procédé de traitement d'une pièce moulée, comprenant les étapes suivantes :
a) fournir une pièce moulée constituée de
a1) au moins un polymère K et
a2) au moins un matériau,
b) mise en contact de la pièce moulée avec au moins un solvant A,
**caractérisé par** :
b1) la préparation d'un gel à base du polymère K de la pièce moulée et du solvant A,
c) formation d'un gradient de concentration à la surface de la pièce moulée à partir du polymère K et du matériau, la concentration du polymère K augmentant vers la surface,
d) séparation au moins partielle des composants,
le solvant A faisant gonfler le polymère K au moins partiellement à la surface,
la pièce moulée étant fabriquée par fabrication additive et le matériau étant recouvert du polymère K, et
le matériau étant choisi parmi des matériaux organiques électriquement conducteurs, des polymères ayant une polarité différente de celle du polymère K, des céramiques, des métaux, des alliages, des verres, du graphite, du charbon actif, du noir de carbone, des fullerènes, des nanotubes de carbone, des fibres de carbone, du graphène et des dérivés du graphène tels que des nanoplaquettes de graphène, du carbone amorphe ou des mélanges de ceux-ci.

2. Procédé selon la revendication 1, dans lequel l'étape b) est effectuée pendant 5 secondes à 20 heures, de préférence pendant 1 minute à 5 heures.

3. Procédé selon l'une des revendications 1 à 2, comprenant l'étape :
e) séchage de la pièce moulée à la pression atmosphérique et à une température comprise entre 10 °C et 140 °C ou, en variante, séchage sous vide (0-900 mbar) à des températures comprises entre 10 °C et 140 °C.

4. Procédé selon l'une des revendications 1 à 3, dans lequel le polymère K présent à la surface de la pièce moulée après l'étape de séchage e) présente une cristallinité différente de celle qu'il présentait avant le procédé, la cristallinité différente se traduisant par une réfraction modifiée de la lumière à la surface de la pièce moulée, et la réfraction modifiée conférant à la pièce moulée un aspect blanc.

5. Procédé selon la revendication 4, dans lequel la cristallinité modifiée à la surface de la pièce moulée peut être influencée par la température et la pression choisies dans le procédé de séchage e) ainsi que par la durée de mise en contact de la pièce moulée avec le solvant A.

6. Procédé selon l'une des revendications précédentes, dans lequel l'intensité du processus de gonflement à la surface du polymère K peut être influencée par la température, la pression ou la durée de l'étape b).

7. Procédé selon l'une des revendications précédentes, les étapes b) à d) étant réalisées à la pression atmosphérique.

8. Procédé selon l'une des revendications précédentes, dans lequel, lors de l'étape de séchage e), la température est inférieure à la température de fusion du polymère K, de préférence inférieure à la température de ramollissement du polymère K, et la combinaison de la pression et de la température choisies permet au solvant de s'échapper du gel formé à l'étape b1).

9. Procédé selon l'une des revendications précédentes, comprenant l'étape :
f) coloration de la pièce moulée avec un colorant.

10. Procédé selon l'une des revendications précédentes, dans lequel le polymère K est constitué d'un matériau non conducteur et le matériau K est constitué d'un matériau conducteur, et la surface de la pièce moulée présente une conductivité électrique modifiée après l'étape de séchage f).

11. Procédé selon l'une des revendications 1 à 10, dans lequel le polymère K est choisi dans le groupe constitué par les élastomères thermoplastiques, les polyoxyméthylènes, les polyéthylène téréphtalates, les polyéthylène téréphtalate glycols, les polyéther bloc amides, les polyéthylène furanoates, les polyuréthanes, acrylonitrile-butadiène-styrènes, polyamides thermoplastiques, photopolymères, polymères triblocs à base de polystyrène et de blocs de poly(oxyde d'éthylène), polyamides, polyesters, polyoléfines, polyacrylates, polyvinylamines, polyacrylamides, polyméthacrylates de méthyle, polyéthers, polycarbonates, polylactides, polyéthersulfones, polysulfones, polyphénylsulfones, polyimides, polyétherimides, polycétones, polyéthercétones, polymères styréniques, polymères blocs styréniques, acrylonitrile-styrène-acrylates ou copolymères, mélanges ou combinaisons des types de polymères mentionnés.

12. Procédé selon l'une des revendications 1 à 11, dans lequel la mise en contact de la pièce moulée s'effectue par immersion, vaporisation ou pulvérisation.

13. Procédé selon l'une des revendications 1 à 12, dans lequel le solvant A est choisi dans le groupe constitué par les cétones, les aldéhydes, les lactones, lactames, nitriles, composés nitrés, amides d'acides carboxyliques tertiaires, dérivés d'urée, sulfoxydes, sulfones, esters d'acide carbonique, eau, alcools, amines, acides carboxyliques, amides primaires, amides secondaires, hydrocarbures halogénés ou leurs mélanges.

14. Procédé selon l'une des revendications 1 à 13, dans lequel le solvant A est choisi parmi le groupe constitué d'esters d'acide carbonique, de lactones, de lactames, de sulfoxydes ou de mélanges de ceux-ci.

15. Élément pouvant être obtenu à partir du procédé selon l'une des revendications 1 à 14.
